# EUROPÄISCHE PATENTSCHRIFT

(11) **EP 1 381 879 B1**
(45) Veröffentlichungstag und Bekanntmachung des Hinweises auf die Patenterteilung: **29.06.2005**
(21) Anmeldenummer: 02740292.4
(22) Anmeldetag: 25.04.2002
(51) Int. Cl.: G01S 7/00, G01S 13/94

(54) **VERFAHREN ZUR ERKENNUNG UND IDENTIFIZIERUNG VON OBJEKTEN**
METHOD FOR RECOGNIZING AND IDENTIFYING OBJECTS
PROCEDE DE RECONNAISSANCE ET D'IDENTIFICATION D'OBJETS

(30) Priorität: 26.04.2001 DE 10120537
(43) Veröffentlichungstag der Anmeldung: 21.01.2004
(73) Patentinhaber: EADS Deutschland GmbH, 85521 Ottobrunn (DE)
(72) Erfinder: KLAUSING, Helmut, 82234 Wessling-Hochstadt (DE); KALTSCHMIDT, Horst, 85579 Neubiberg (DE)
(74) Vertreter: Meel, Thomas
(86) Internationale Anmeldenummer: PCT/DE2002/001520
(87) Internationale Veröffentlichungsnummer: WO 2002/088770

(56) Entgegenhaltungen:
- EP-A- 0 915 349
- DE-A- 4 328 573
- DE-A- 10 015 164
- DE-A- 19 902 008
- DE-C- 3 922 086
- US-A- 5 963 653
- US-B1- 6 219 594
- CHEN Y: "REGISTRATION OF SAR AND FLIR IMAGES FOR ATR APPLICATIONS" PROCEEDINGS OF THE SPIE, SPIE, BELLINGHAM, VA, US, Bd. 4380, 16. April 2001 (2001-04-16), Seiten 127-134, XP008007817
- SHAHBAZIAN E ET AL: "FUSION OF IMAGING AND NON-IMAGING DAT FOR SURVEILLANCE AIRCRAFT" PROCEEDINGS OF THE SPIE, SPIE, BELLINGHAM, VA, US, Bd. 3067, 24. April 1997 (1997-04-24), Seiten 179-189, XP008007793

## Beschreibung

Die Erfindung betrifft ein Verfahren zur Erkennung und Identifizierung von Objekten gemäß dem Oberbegriff des Patentanspruchs 1.

In US 5,963,653 wird ein Verfahren zur Erkennung und Identifizierung von Objekten beschrieben, wobei Informationen mehrerer Sensoren gemeinsam verarbeitet und ausgewertet werden. Insbesondere werden dabei SAR-(synthetic aperture radar) Radargeräte und IR-(infrared) Sensoren verwendet. Als nachteilig erweist sich allerdings, dass mit den SAR-Radargeräten lediglich eine Abbildung quer zur Flugrichtung möglich ist. Eine gemeinsame Auswertung von Informationen der SAR-Radargeräte mit IR-Sensoren ist somit lediglich für einen eingeschränkten Sichtbereich möglich.

Aufgabe der Erfindung ist es somit, ein Verfahren anzugeben bei dem eine Erkennung und Identifizierung von Objekten mit SAR-Radargeräten und IR-Sensoren auch in Flugrichtung möglich ist.

Diese Aufgabe wird mit dem Verfahren gemäß dem Patentanspruch 1 gelöst. Vorteilhafte Ausführungen des erfindungsgemäßen Verfahrens sind Gegenstand von Unteransprüchen.

Erfindungsgemäß erfolgt die Erzeugung der synthetischen Apertur nach dem ROSAR-Prinzip, wobei eine Vielzahl von Antennenelementen, die das Radargerät umfaßt, entlang der gekrümmten Flugkörperkontur am Flugkörper angebracht werden und zeitlich nacheinander angesteuert und abgetastet werden. Die von den Radargeräten und abbildenden Sensoren gewonnenen Informationen werden erfindungsgemäß derart weiterverarbeitet werden, dass in jede Blickrichtung eine optimale Abbildung der Umgebung des Flugkörpers möglich ist.

Mit den erfindungsgemäß angeordneten Antennenelementen des nach dem ROSAR-Prinzip arbeitenden Radargeräts, ist es somit möglich, nicht nur das Gebiet quer zur Flugrichtung des Flugkörpers abzubilden, sondern auch das Gebiet in Flugrichtung des Flugkörpers. Im Gegensatz zu bekannten SAR-Radargeräten ist der Sichtbereich des in dem erfindungsgemäßen Verfahrens verwendeten ROSAR-Radargeräts auf keinen bestimmten Blickwinkel eingeschränkt.

Die beim herkömmlichen SAR-Verfahren bekannte synthetische Apertur wird in dem vorgeschlagenen Radarsystem nicht dadurch erzeugt, dass sich z.B. der Flugkörper relativ gegenüber dem Zielobjekt bewegt, sondern die einzelnen, zueinander benachbart angeordneten Antennenelemente werden zeitlich nacheinander elektronisch angesteuert und abgetastet. Auch bei der Auswertung nach dem ROSAR-Verfahren wird die rotierende Antennenbewegung durch das zeitlich versetzte Ansteuern und Abtasten benachbarter Antennenelemente simuliert.

Mit dem erfindungsgemäßen Verfahren wird insbesondere durch eine aktive Hinderniswarnung und Abbildung der gegebenen Erdoberfläche die Orientierung und Navigation eines Flugkörpers wesentlich verbessert. Aber auch die Orientierung insbesondere eines Flugzeugs bei Start und Landung, z.B. bei technisch unzureichend ausgestatteten Flugplätzen, wird wesentlich verbessert.

Hierzu bedarf es einer bildlichen Darstellung und Wahrnehmung von Flugweg und Landeplatz, sowie einer rechtzeitigen Erkennung von Hindernissen, einer präzisen Navigationsmöglichkeit und einer effizienten Übertragung von Daten/Sprache über Kommunikationsnetze.

Die sichere Landung von Flugzeugen auf technisch unzureichend oder überhaupt nicht ausgerüsteten Flugplätzen bedarf einer allwetterfähigen flugzeugautonomen Heranführung an die Landebahn so wie es mit einem nach dem ROSAR-Prinzip arbeitenden Radargerät (ROSAR-Sensor) möglich ist und der zusätzlichen Fähigkeit, auch kleinere für den Start- und Landevorgang gefährliche Teile z.B. auf der Landebahn zu erkennen.

Durch die nachfolgend näher beschriebenen Maßnahmen wird eine umfassende Abdeckung des Landekonzeptes für Flugkörper, z.B. Flugzeuge, Drohnen oder Hubschrauber mit unterschiedlichen Sensorsystemen - auch unter Beachtung militärischer Aspekte - gegeben, einschließlich einer intelligenten Signalverarbeitung und Kommunikation.

Die von den Sensoren, welche vorteilhaft in die Flugzeugnase integrierte Laser-Radargeräte, Wärmebildgeräte oder Videokameras sind, und dem ROSAR-Sensor gewonnenen Informationen werden vorteilhaft von einer ersten Datenverarbeitungseinheit erfaßt und zu einem gemeinsamen Bild verarbeitet. Durch die multispektrate Wirkung bei einer Kombination eines ROSAR-Sensors mit einem optronischen Sensor werden Objektsignaturen besser und präziser ausgewertet und abgebildet. Wird als optronischer Sensor z.B. ein Laser-Radargerät verwendet, so wird für das gemeinsame Bild eine detaillierter Abbildung der Umgebung infolge besserer Entfernungs- und Lateralauflösung erreicht.

Mit dem erfindungsgemäßen Verfahren wird mit Hilfe des ROSAR-Sensors eine quasi-dreidimensionale Radar-Bilddarstellung von Gelände und Hindernissen gegeben. Die Feinauflösung erfolgt mit den optronischen Sensoren, welche vorteilhaft Laser-Radar, Wärmebildgerät oder Videokamera sind. Durch die Kopplung des nach dem ROSAR-Prinzip, üblicherweise im cm- bzw. mm-Wellenlängenbereich arbeitenden Radargeräts (ROSAR-Sensor) mit den optronischen Sensoren, welche üblicherweise im infraroten oder im sichtbaren Bereich arbeiten, ergänzen sich die Allwetterfähigkeit des ROSAR-Sensors mit der hohen Auflösefähigkeit der optronischen Sensoren im Nahbereich. So ist z.B. beim Landen eines Flugzeugs die eingeschränkte Einsetzbarkeit der optronischen Sensoren bei schlechtem Wetter von untergeordneter Bedeutung, da hier für die Erkennung von Hindernissen auf der Landebahn nur geringe Reichweiten gefordert werden.

Ein weiterer Vorteil ist, dass mit einer Kombination verschiedener aktiver und passiver optronischer Sensoren mit dem ROSAR-Sensor eine abgestufte Schlechtwetterfähigkeit erreicht wird. So ist es mit dem erfindungsgemäßen Verfahren gewährleistet, dass auch beim Eintritt in ein Schlechtwetterbereich eine Abbildung der Umgebung möglich ist.

Die Reichweite optronischer Sensoren bei Schlechtwetter ist für den passiven Infrarot-Sensor (in den atmosphärischen Fenstern 8 - 12 µm und 3 - 5 µm) wegen der größeren Wellenlänge und der beleuchtungsunabhängigen thermischen Emission abzubildender Objekte (Feuersicht) größer als die des Laser-Radars (im Wellenlängenbereich bei ca. 1,5 µm), gefolgt von einer Videokamera.

Mit dem erfindungsgemäßen Verfahren können Daten verschiedener Dimensionalität miteinander verknüpft werden. Ein nach dem ROSAR-Prinzip arbeitendes Radargerät oder ein Laser-Radargerät erzeugen eine räumliche Draufsicht des zu abzubildendes Geländes. Die optronischen Sensoren, wie z.B. Wärmebildkameras oder Videokameras, liefern ein perspektivisches Bild des abzubildendes Geländes. Mit dem erfindungsgemäßen Verfahren werden diese Informationen miteinander verknüpft und können sichtbar gemacht oder weiterverarbeitet werden. So können z.B. auf einer Landebahn befindliche flache Teile in einem kartographischen Bild der Landebahn auch als flache Teile dargestellt werden.

Ein Vorteil der Verknüpfung eines ROSAR-Sensors mit optronischen Sensoren ist, dass neben einer wetterunabhängigen Bestimmung der Objektposition auch eine wetterunabhängige Bestimmung von Objekteigenschaften möglich ist. So ist es mit einem ROSAR-Sensor auch bei Schlechtwetter möglich, Informationen über z.B. das Material eines abzubildenden Objektes zu erhalten.

In einer zweiten Datenverarbeitungseinheit wird in einer vorteilhaften Ausführung des erfindungsgemäßen Verfahrens das in der ersten Datenverarbeitungseinheit erzeugte Bild mit einem entsprechenden Geländebild aus einer Datenbank zu einem weiteren Bild weiterverarbeitet. Diese Weiterverarbeitung der Daten mit dem entsprechenden Geländebild erfolgt mittels der bekannten Passpunktmethode und zusätzlich mit einer Passareal-Methode. Passareale sind Geländebereiche, die sich durch auffällige Linienanordnungen oder Texturen auszeichnen und die in der Landkarte angegeben sind. Die für die Datenverknüpfung notwendige Bildentzerrung wird dann analog zu der bekannten Passpunktmethode und Passarealen vorgenommen.

Die Verknüpfung des in der ersten Datenverarbeitungseinheit erzeugten Bild mit dem Geländebild erfolgt mittels symbolischer und/oder mittels ikonischer Bildverarbeitung. Bei der ikonischen Bildverarbeitung werden die symbolisch auf der Karte angeordneten Passpunkte in Passareale als zweidimensionale Bildsignal, - wie sie besonders für Straßenkreuzungen und Texturbesonderheiten typisch sind, - transformiert und dann vorteilhaft korrelativ mit den Bilddaten aus der ersten Datenverarbeitungseinheit verknüpft. Diese im Rahmen der Datenfusion gewonnenen Daten, z.B. Hindernisdaten, werden vorteilhaft entweder auf einem Display angezeigt oder in einem an sich bekannten virtuellen Cockpit dargestellt.

Die Navigation erfolgt insbesondere auf der Basis einer digitalisierten Geländekarte einschließlich zugefügter Infrastrukturdaten (Flugplatz, Landebahn, Taxiways etc.) in Form einer CD-ROM als Datenbank. Beim virtuellen Cockpit erfolgt also eine Flugführung anhand der Kombination eines digitalen Geländemodells in Verbindung mit einer satellitengestützten Navigation, vorteilhaft durch GPS (global positioning system). Das gerade überflogene Gebiet wird aus der Sichtposition des Piloten in Form einer synthetischen Sicht in Echtzeit dargestellt. Wegen der besseren Positionsgenauigkeit wird das besser geeignete Differential-GPS vorgeschlagen.

Vorteilhaft können die gewonnenen Daten an eine Auswertestation oder an andere Kommunikations-Teitnehmer, beispielsweise andere Flugzeuge, übermittelt werden. Dies kann z.B. über das Mobilfunknetz (GSM-Netz) und/oder mittels Mobilkommunikation über Satelliten vorgenommen werden. Der Einsatz der Mobilkommunikation ermöglicht die beidseitige Kommunikation, d.h. Vollduplexbetrieb und Gruppenkommunikation. Alternativ ist auch eine Übertragung mittels Kurzwellentechnik (HFNHF-Netz) möglich, aber dann muß die benötigte große Antenne am Rumpf des Flugzeuges integriert werden. Dafür jedoch hat die HF/VHF-Übertragung den Vorteil, dass sie unabhängig von verfügbarer Infrastruktur ist.

Die Übertragung erfolgt ganz oder teilweise automatisiert und dient auch zum Aufbau eines Verbands- oder Flottenmanagements. Weiterhin erfolgt eine automatische, halbautomatische oder auch manuell gesteuerte Kommunikation mit Datenbanken (bspw. Datenbank des Flughafens) erfolgen, um einerseits für die Flugsicherheit relevante Daten abzurufen und andererseits aktuelle Daten aus dem Umfeld des Flugzeuges beim Landen (Hindernisse, Wetterzustandsdaten, etc.) an externe Datenbanken zu übertragen. Dies ist besonders bei militärischen Einsätzen in unbekannten Landeplatzgeländen erforderlich und dienlich.

Die Erfindung wird im weiteren anhand von Figuren näher erläutert. Es zeigen:
- Fig. 1: in schematischer Draufsicht einen Landeplatz sowie einen Flugkörper mit beispielhaft angeordneten Sensoren,
- Fig. 2: das erfindungsgemäße Verfahren als beispielhafte Darstellung in einem Blockschaltbild.

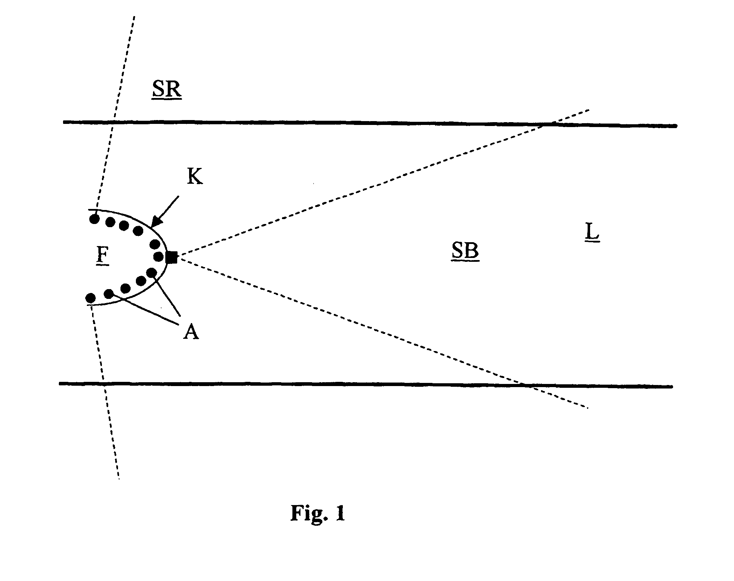

In Fig. 1 ist in schematischer Draufsicht ein Landeplatz L sowie ein Flugkörper F dargestellt. Entlang der Kontur K des Flugkörpers F sind beispielhaft die Antennenelemente A des ROSAR-Sensors angeordnet. Am Bug des Flugkörpers F ist außerdem ein abbildender Sensor S, z.B. ein Laser-Radar, Wärmebildgerät oder eine Videokamera angebracht. Mit diesem Sensor S wird in Flugrichtung ein maximaler Sichtbereich SB abgebildet. Mit den Antennenelementen A des ROSAR-Sensors ist es möglich einen weitaus größeren Sichtbereich abzubilden. Der in Fig. 1 eingezeichnete Sichtbereich SR ist lediglich beispielhaft. Bei geeigneter Anordnung der Antennenelemente A entlang der Kontur K des Flugkörpers F ist auch eine Rundsicht möglich.
Die Grenzen der Sichtbereiche SR, SB sind dabei jeweils durch gestrichelte Linien gekennzeichnet.

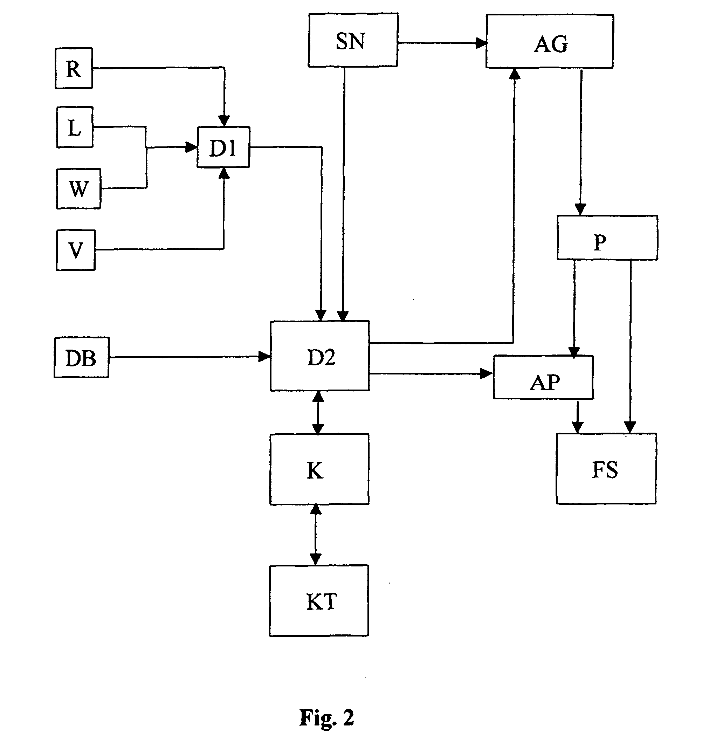

Das erfindungsgemäße Verfahren ist in Fig. 2 beispielhaft in einem Blockschaltbild dargestellt. Die Informationen der einzelnen Sensoren, beispielhaft ROSAR-Sensor R, Laser-Radar L, Wärmebildgerät W und Videokamera V werden in der ersten Datenverarbeitungseinheit D1 zusammengeführt. Die Daten der ersten Datenverabeitungseinheit D1 werden einer zweiten Datenverarbeitungseinheit D2 zugeführt. Dieser zweiten Datenverarbeitungseinheit D2 werden Daten aus der Satellitennavigation SN zugeführt. Außerdem wird der Datenverarbeitungseinheit D2 ein digitales Geländebild aus einer Datenbank DB zugeführt. Darüber hinaus können zwischen der Datenverarbeitungseinheit D2 und einem Kommunikationssystem K, welches z.B. ein GSM-Netz, ein Satellitenkommunikationsnetz oder ein HF-/VHF-Netz ist, Informationen ausgetauscht werden. An das Kommunikationsnetz K sind ferner weiterer Kommunikationsteilnehmer KT, z.B. Flugplätze oder andere Flugzeuge angeschlossen. Somit ist also möglich, dass Daten aus der Datenverarbeitungseinheit D2 an die übrigen Kommunikationsteilnehmer KT übermittelt werden können oder dass Daten von anderen Kommunikationsteilnehmern KT an die Datenverarbeitungseinheit D2 übertragen werden können.

Die in der Datenverarbeitungseinheit D2 erzeugten Daten werden einem Autopiloten AP und einem Anzeigegerät AG, z.B. ein Display oder virtuelles Cockpit zugeführt.

Dem Anzeigegerät AG werden zudem Daten aus der Satellitennavigation SN zugeführt und einem Piloten P sichtbar gemacht. Der Pilot P kann mit diesen Daten einen Autopiloten AP speisen. Die gesamte Flugzeugsteuerung FS wird entweder durch den Piloten P oder dem Autopiloten AP gewährleistet.

## Patentansprüche

1. Verfahren zur Erkennung und Identifizierung von Objekten mittels mehrerer Sensoren, insbesondere mit abbildenden Sensoren (L, W, V) im infraroten und/oder sichtbaren Wellenlängenbereich; und einem Radargerät (R), welches auf der Erzeugung einer synthetischen Apertur basiert, **dadurch gekennzeichnet, dass** die Erzeugung der synthetischen Apertur nach dem ROSAR-Prinzip erfolgt, wobei eine Vielzahl von Antennenelementen (A), die das Radargerät (R) umfaßt, entlang der gekrümmten Flugkörperkontur (K) am Flugkörper (F) angebracht werden und zeitlich nacheinander angesteuert und abgetastet werden und wobei die von den Radargerät (R) und den abbildenden Sensoren (L, W, V) gewonnenen Informationen derart weiterverarbeitet werden, dass in jede Blickrichtung eine Abbildung der Umgebung des Flugkörpers (F) möglich ist.

2. Verfahren nach Anspruch 1, **dadurch gekennzeichnet, dass** die abbildenden Sensoren (L, W, V) in den Bug des Flugkörpers (F) integriert werden und insbesondere Laser-Radar, Wärmebildgeräte oder Videokameras sind.

3. Verfahren nach einem der vorangehenden Ansprüche, **dadurch gekennzeichnet, dass** die von dem Radargerät (R) und/oder den einzelnen Sensoren (L, W, V) gewonnenen Informationen von einer ersten Datenverarbeitungseinheit (D1) erfaßt und zu einem gemeinsamen Bild verarbeitet werden.

4. Verfahren nach Anspruch 3, **dadurch gekennzeichnet, dass** in einer zweiten Datenverarbeitungseinheit (D2) das in der ersten Datenverarbeitungseinheit (D1) erzeugte Bild mit einem entsprechenden Geländebild aus einer Datenbank (DB) zu einem weiteren Bild verarbeitet wird.

5. Verfahren nach Anspruch 4, **dadurch gekennzeichnet, dass** in der zweiten Datenverarbeitungseinheit (D2) die symbolisch auf dem Geländebild angeordneten Passpunkte in ein zweidimensionales Bildsignal transformiert werden, welches mit dem in der ersten Datenverarbeitungseinheit (D1) erzeugten Bild korreliert wird.

6. Verfahren nach Anspruch 4 oder 5, **dadurch gekennzeichnet, dass** das in der zweiten Datenverarbeitungseinheit (D2) erzeugte Bild in einem Anzeigegerät (AG), insbesondere einem Display oder virtuellen Cockpit, sichtbar gemacht wird.

7. Verfahren nach einem der vorangehenden Ansprüche, **dadurch gekennzeichnet, dass** die für Informationsverarbeitung und/oder Bilddarstellung relevante Daten mittels Kommunikationsnetzwerken (K), insbesondere GSM-Mobilfunk, Mobilkommunikation über Satelliten oder HFNHF-Netz, übermittelt werden.

8. Verfahren nach Anspruch 7, **dadurch gekennzeichnet, dass** die relevanten Daten aus der Satellitennavigation (SN), insbesondere GPS oder Differential-GPS und/oder von anderen Kommunikationsteilnehmern (KT), insbesondere externen Empfangs- und Auswertestationen und/oder anderen Flugkörpern stammen.

## Claims

1. Method for recognition and identification of objects by means of two or more sensors, in particular using imaging sensors (L, W, V) in the infrared and/or visible wavelength range and a radar (R) which is based on the production of a synthetic aperture, **characterized in that** the synthetic aperture is produced on the basis of the ROSAR principle, with a large number of antenna elements (A) for the radar (R) being fitted along the curved missile contour (K) on the missile (F) and being driven and sampled successively in time, and with the information obtained from the radar (R) and from the imaging sensors (L, W, V) being processed further in such a way that imaging of the environment of the missile (F) is possible in each viewing direction.

2. Method according to Claim 1, **characterized in that** the imaging sensors (L, W, V) are integrated in the nose of the missile (F) and, in particular, are laser radars, thermal imagers or video cameras.

3. Method according to one of the preceding claims, **characterized in that** the information obtained from the radar (R) and/or from the individual sensors (L, W, V) is recorded by a first data processing unit (D1) and is processed to form a joint image.

4. Method according to Claim 3, **characterized in that** the image which is produced in the first data processing unit (D1) is processed in a second data processing unit (D2) with a corresponding terrain image from a database (DB) to form a further image.

5. Method according to Claim 4, **characterized in that** the matching points, which are arranged symbolically on the terrain image, are transformed to a two-dimensional image signal (which is correlated with the image produced in the first data processing unit (D1)) in the second data processing unit (D2).

6. Method according to Claim 4 or 5, **characterized in that** the image which is produced in the second data processing unit (D2) is visualized on an indicating appliance (AG), in particular a display or a virtual cockpit.

7. Method according to one of the preceding claims, **characterized in that** the data which is relevant for information processing and/or image display is transmitted by means of communications networks (K), in particular GSM mobile radio, mobile communication via satellites or via an HF/VHF network.

8. Method according to Claim 7, **characterized in that** the relevant data originates from the satellite navigation (SN), in particular GPS or differential GPS, and/or from other communication subscribers (KT), in particular external receiving and evaluation stations and/or other airborne vehicles.

## Revendications

1. Procédé de reconnaissance et d'identification d'objets au moyen de plusieurs capteurs, en particulier par des capteurs imageurs (L, W, V) dans la gamme d'ondes infrarouge et/ou visible ; et d'un radar (R) qui est basé sur la génération d'une ouverture synthétique, **caractérisé en ce que** la génération de l'ouverture synthétique s'effectue selon le principe ROSAR, dans lequel une pluralité d'éléments d'antenne (A) comprise dans le radar (R) est installée sur le missile (F) le long du contour de missile courbé (K) et pilotée et échantillonnée successivement dans le temps, et dans lequel les informations obtenues par le radar (R) et les capteurs imageurs (L, W, V) sont traitées de telle sorte qu'une image de l'environnement du missile (F) est possible dans chaque direction de visée.

2. Procédé selon la revendication 1, **caractérisé en ce que** les capteurs imageurs (L, W, V) sont intégrés dans le nez du missile (F) et sont en particulier des lidars imageurs, des appareils de thermographie ou des caméras vidéo.

3. Procédé selon l'une quelconque des revendications précédentes, **caractérisé en ce que** les informations obtenues par le radar (R) et/ou les capteurs individuels (L, W, V) sont détectées par une première unité de traitement de données (D1) et traitées pour former une image commune.

4. Procédé selon la revendication 3, **caractérisé en ce que** dans une deuxième unité de traitement de données (D2), l'image produite dans la première unité de traitement de données (D1) est traitée avec une image de terrain correspondante provenant d'une base de données (DB) pour former une autre image.

5. Procédé selon la revendication 4, **caractérisé en ce que** dans la deuxième unité de traitement de données (D2), les points d'appui disposés symboliquement sur l'image de terrain sont transformés en un signal d'image bidimensionnel qui est mis en corrélation avec l'image produite dans la première unité de traitement de données (D1).

6. Procédé selon la revendication 4 ou 5, **caractérisé en ce que** l'image produite dans la deuxième unité de traitement de données (D2) est visualisée dans un appareil d'affichage (AG), en particulier un affichage ou un poste de pilotage virtuel.

7. Procédé selon l'une quelconque des revendications précédentes, **caractérisé en ce que** les données pertinentes pour le traitement d'informations et/ou la présentation sont transmises au moyen de réseaux de communication (K), en particulier par téléphonie mobile GSM, par communication mobile par satellites ou réseau HF/VHF.

8. Procédé selon la revendication 7, **caractérisé en ce que** les données pertinentes proviennent de la navigation par satellites (SN), en particulier du GPS ou du GPS différentiel et/ou d'autres correspondants de communication (KT), en particulier de stations externes de réception et d'évaluation et/ou d'autres missiles.
